# EUROPÄISCHE PATENTSCHRIFT

(11) **EP 3 032 118 B1**
(45) Veröffentlichungstag und Bekanntmachung des Hinweises auf die Patenterteilung: **10.05.2017**
(21) Anmeldenummer: 15192139.2
(22) Anmeldetag: 29.10.2015
(51) Int. Cl.: F16B 35/06, F16B 5/02

(54) **ANSCHLUSSADAPTER FÜR EIN HOCHSPANNUNGSBAUTEIL SOWIE EINE HOCHSPANNUNGSBAUGRUPPE**
CONNECTION ADAPTER FOR A HIGH VOLTAGE COMPONENT AND A HIGH VOLTAGE ASSEMBLY
ADAPTATEUR DE RACCORDEMENT DE COMPOSANT HAUTE TENSION ET BLOC HAUTE TENSION

(30) Priorität: 12.12.2014 DE 102014225748
(43) Veröffentlichungstag der Anmeldung: 15.06.2016
(73) Patentinhaber: Power Plus Communications AG, 68167 Mannheim (DE)
(72) Erfinder: Liotta, Giovanni, 68305 Mannheim (DE); Veselcic, Marko, 67122 Altrip (DE)
(74) Vertreter: Patent- und Rechtsanwälte Ullrich & Naumann

(56) Entgegenhaltungen:
- EP-A1- 2 871 484
- WO-A1-2013/191562
- US-A1- 2013 091 787

## Beschreibung

Die Erfindung betrifft einen Anschlussadapter für ein Hochspannungsbauteil, insbesondere eine Mittelspannungskapazität, wobei der Anschlussadapter einen Grundkörper aufweist, an dem an zwei gegenüberliegenden Seiten jeweils ein Anschlussmittel ausgebildet ist, wobei mindestens eines der beiden Anschlussmittel - erstes Anschlussmittel - als Gewindebolzen ausgebildet ist, der sich von dem Grundkörper weg erstreckt, und wobei das erste Anschlussmittel in eine in dem Hochspannungsbauteil ausgebildeten Gewindebuchse einschraubbar ist.

Die Erfindung betrifft ferner eine Hochspannungsbaugruppe mit einem Gehäuse, einem Hochspannungsbauteil, insbesondere einer Mittelspannungskapazität, und einem Anschlussadapter.

In der Praxis ist es üblich, Hochspannungsbaugruppen aus mehreren Bestandteilen, d.h. Baugruppen, die für eine Spannung größer als 1 kV ausgelegt sind und aus mehreren Bestandteilen bestehen, mit einer Vergussmasse zu vergießen. Hierbei wird der Raum zwischen dem Gehäuse und den einzelnen Hochspannungsbauteilen der Hochspannungsbaugruppe mit der Vergussmasse ausgefüllt. Durch die Vergussmasse werden Kriechströme im Inneren der Hochspannungsbaugruppe vermieden und die mechanische Stabilität der Anordnung wird verbessert.

Ein Beispiel einer derartigen Hochspannungsbaugruppe ist ein Koppler, wie er in der nicht vorveröffentlichten deutschen Patentanmeldung 10 2014 222 420 beschrieben ist. Der Koppler besteht aus einem Gehäuse, in dem bei einer Mittelspannungsausführung (d.h. für Wechselspannungen mit Effektivwerten zwischen 1 kV und 52 kV) eine Mittelspannungskapazität angeordnet ist. Zum Anschluss dieses Kopplers an ein Energieversorgungsnetzwerk ist ein Anschlussadapter vorgesehen, der an einer Seite einen M5-Gewindebolzen (erstes Anschlussmittel) und an der gegenüberliegenden Seite eine M12-Gewindebuchse (zweites Anschlussmittel) ausweist. Der M5-Gewindebolzen kann in eine entsprechende Gewindebuchse an der Mittelspannungskapazität eingeschraubt werden. Die M12-Gewindebuchse des Anschlussadapters dient dem Anschrauben des Kopplers an einen M12-Gewindebolzen beispielsweise an einer Sammelschiene des Mittelspannungsnetzwerks. Der Bereich zwischen Gehäuse und Mittelspannungskapazität ist üblicherweise mit einer Vergussmasse vergossen Zum Erhöhen der Spannungsfestigkeit dieses Kopplers können mehrere Kopplermodule gestapelt werden. Hierzu kann im einfachsten Fall eine M5-Gewindestange verwendet werden, die die Kapazitäten zweier benachbarter Koppler elektrisch und mechanisch miteinander verbindet. Zum Erhöhen der Stabilität ist aber auch bekannt, einen weiteren Anschlussadapter zu verwenden, der an beiden Seiten einen M5-Gewindebolzen aufweist. Einer der M5-Gewindebolzen wird in eine Gewindebuchse in der dem ersten Anschlussadapter abgewandten Seite der ersten Koppelkapazität eingeschraubt. Der andere M5-Gewindebolzen des weiteren Anschlussadapters ist in die Koppelkapazität des zweiten Kopplers eingeschraubt. Der Bereich zwischen den beiden Koppelkapazitäten ist üblicherweise wiederum vergossen.

Als Vergussmasse kommt meist ein niederviskoses Silikon zum Einsatz. Aufgrund der Beschaffenheit der Vergussmasse muss dieses langsam eingefüllt werden. Trotz sorgfältiger Handhabung kann es vorkommen, dass kleinere Luftblasen in der Vergussmasse eingeschlossen werden. Wenn Luftblasen in der Nähe eines spannungsführenden Teils der Hochspannungsbaugruppe vorhanden sind, können diese beim Betrieb der Hochspannungsbaugruppe zu Teilentladungen führen.

Teilentladungen, häufig mit TE abgekürzt, sind nach IEC 60270 definiert als lokale dielektrische Durchschläge in einem kleinen Bereich eines elektrischen Isolators unter hoher Feldbeanspruchung. Die durch TE hervorgerufene leitende Verbindung besteht nur für sehr kurze Zeit, üblicherweise unter 1 µs. Die während einer TE abgeleitete Ladung liegt üblicherweise im Pico-Coulomb-Bereich, beispielsweise zwischen 5 pC und wenigen 100 pC bei 24 kV. Dennoch führen Teilentladungen zu Energieverlusten und bei entsprechender Intensität der TE zu einer zunehmenden Schädigung der betroffenen Isolatoren, im Fall des zuvor angesprochenen Kopplers zu einer Schädigung der Vergussmasse und des Gehäuses. Zudem erzeugen TE hochfrequente Störungen, die beispielsweise bei Powerline-Communication-Anwendungen (PLC-Anwendungen) zu einer Verschlechterung des Signal-zu-Rausch-Verhältnisses (SNR) und damit zu einer Reduktion der Übertragungsrate führen.

Der vorliegenden Erfindung liegt daher die Aufgabe zugrunde, ein Anschlussadapter und eine Hochspannungsbaugruppe der eingangs genannten Art derart auszugestalten und weiterzubilden, dass Teilentladungen infolge von Lufteinschlüssen in der Vergussmasse beim Betrieb der Hochspannungsbaugruppe weitgehend vermieden oder zumindest reduziert werden können.

Erfindungsgemäß wird die voranstehende Aufgabe durch die Merkmale des Anspruchs 1 gelöst. Danach ist der in Rede stehende Anschlussadapter dadurch gekennzeichnet, dass an dem Grundkörper um das erste Anschlussmittel herum ein erster Bereich und um den ersten Bereich herum ein zweiter Bereich ausgebildet ist, dass der erste Bereich in Erstreckungsrichtung des ersten Anschlussmittels tiefer angeordnet ist als der zweite Bereich und dass der erste Bereich in Richtungen quer zu einer Achse des ersten Anschlussmittels eine Ausdehnung aufweist, die mindestens doppelt, vorzugsweise mindestens dreimal, so groß ist wie der Durchmesser des ersten Anschlussmittels.

Hinsichtlich einer Hochspannungsbaugruppe ist die voranstehende Aufgabe durch die Merkmale des Anspruchs 13 gelöst. Danach umfasst die Hochspannungsbaugruppe einen erfindungsgemäßen Anschlussadapter, wobei der Anschlussadapter durch eine Öffnung in der Wandungen des Gehäuses geführt ist, wobei das erste Anschlussmittel im Inneren des Gehäuses und das zweite Anschlussmittel außerhalb des Gehäuses erreichbar ist, wobei das erste Anschlussmittel in eine Gewindebuchse in dem Hochspannungsbauteil eingeschraubt ist und wobei das zweite Anschlussmittel zum Anschließen der Hochspannungsbaugruppe an ein Hochspannungsnetzwerk, insbesondere ein Mittelspannungsnetzwerk, ausgebildet ist.

Es ist zunächst erkannt worden, dass sich Lufteinschlüsse in einer Vergussmasse, die zu Teilentladungen führen können, besonders häufig im Bereich um das als Gewindebolzen ausgestaltete erste Anschlussmittel auftreten. Da zudem durch die Schraubgewinde relativ spitze Strukturen vorhanden sind, treten ergänzend im Betrieb hohe Felddichten im Bereich um das erste Anschlussmittel auf, wodurch lokal eine besonders hohe Feldbeanspruchung entsteht. Eben diese Lufteinschlüsse sowie die hohen Felddichten führen beim Betrieb des Anschlussadapters zu Teilentladungen.

In erfindungsgemäßer Weise ist erkannt worden, dass durch eine sehr einfache Maßnahme die Felddichten im Bereich um das erste Anschlussmittel reduziert werden kann. Erfindungsgemäß ist hierzu an dem Grundkörper des Anschlussadapters um das erste Anschlussmittel herum ein erster Bereich ausgebildet und um den ersten Bereich herum ein zweiter Bereich. Dabei ist der erste Bereich in Erstreckungsrichtung des Anschlussmittels tiefer angeordnet als der zweite Bereich. Dadurch entsteht an dem Grundkörper des Anschlussadapters um das erste Anschlussmittel herum eine Vertiefung. Da Anschlussmittel und erster und zweiter Bereich Bestandteile des Grundkörpers sind und damit auf annähernd dem gleichen elektrischen Potential liegen, ergibt sich durch die Vertiefung um das erste Anschlussmittel herum eine geänderte Verteilung des elektrischen Felds. Insbesondere ist in der Vertiefung eine deutlich reduzierte Feldstärke vorhanden.

Als weiterer positiver Effekt tritt hinzu, dass der Anschlussadapter bei dessen Verwendung in eine Gewindebuchse in dem Hochspannungsbauteil eingeschraubt ist, wodurch auch die Gewindebuchse und die umgebenden Metallteile ein annähernd gleiches elektrisches Potential wie das erste Anschlussmittel annehmen. Dadurch werden die elektrischen Felder fast vollständig von dem ersten Anschlussmittel und der durch den ersten Bereich gebildeten Vertiefung weggedrängt. Auf diese Weise können - selbst bei Vorhandensein von Lufteinschlüssen um das erste Anschlussmittel herum - keine Teilentladungen entstehen, da im Bereich um das erste Anschlussmittel keine ausreichend hohen Feldstärken für eine Teilentladung vorhanden sind. Auf diese Weise kann durch eine sehr einfache konstruktive Maßnahme das Entstehen von Teilentladungen in Folge von Lufteinschlüssen beim Vergießen der Hochspannungsbaugruppe verhindert werden.

Zum Gewährleisten einer ausreichend guten Verdrängung des elektrischen Felds aus der Vertiefung ist der erste Bereich in Richtungen quer zu einer Achse des ersten Anschlussmittels derart ausgedehnt, dass die Ausdehnung mindestens doppelt, vorzugsweise mindestens dreimal so groß wie der Durchmesser des ersten Anschlussmittels ist. Die Achse des ersten Anschlussmittels ist dabei durch die Symmetrieachse des Gewindebolzens gebildet. In Richtungen quer zu dieser Achse soll der erste Bereich eine Ausdehnung aufweisen, die mindestens doppelt so groß wie der Durchmesser des ersten Anschlussmittels ist. Wenn beispielsweise der erste Bereich durch ein Achteck begrenzt ist, so ist der Abstand zwischen zwei gegenüberliegenden Ecken des Achtecks mindestens doppelt so groß wie der Durchmesser des Anschlussmittels. Entsprechendes gilt für andere regelmäßige oder unregelmäßige Begrenzungslinien des ersten Bereichs.

Prinzipiell wäre denkbar, dass um das erste Anschlussmittel herum ein dritter Bereich ausgebildet ist, der sich unmittelbar an das erste Anschlussmittel anschließt und eine Stufe oder einen sonst geachteten Übergang zwischen dem ersten Anschlussmittel und dem ersten Bereich ausbildet. In einer bevorzugten Ausgestaltung grenzt der erste Bereich jedoch unmittelbar an das erste Anschlussmittel an. Zur Vermeidung von Feldstreuungen ist zudem der erste Bereich vorzugsweise plan ausgeführt. Dies vereinfacht zudem die Produktion des Anschlussadapters, da der erste Bereich einfach durch eine Fräse oder eine Drehmaschine in den Grundkörper eingebracht werden kann. In einer weiter bevorzugten Weiterbildung ist der erste Bereich in seinem Außenumfang kreisrund ausgebildet. Auch diese Ausgestaltung begünstigt die Verteilung des elektrischen Feldes und vereinfacht die Produktion des Anschlussadapters.

Zur weiteren Begünstigung der Feldverteilung ist der zweite Bereich vorzugsweise genauso breit oder breiter wie der Durchmesser des ersten Anschlussmittels. Wenn beispielsweise das erste Anschlussmittel einen Durchmesser von 5 mm aufweist, so wäre die Breite des zweiten Bereichs größer oder gleich dieses Durchmessers, also größer oder gleich 5 mm. Diese Ausgestaltung begünstigt sowohl die mechanische Stabilität als auch die Feldverteilung um das erste Anschlussmittel herum.

Zum Einsparen von Material des Grundkörpers kann der zweite Bereich Teil einer Auskragung sein, die an dem Grundkörper gebildet ist. Dies bedeutet, dass sich der zweite Bereich in eine Richtung quer zu der Achse des ersten Anschlussmittels weiter nach außen erstreckt wie der Grundkörper in einem Bereich unterhalb des zweiten Bereichs. Diese Auskragung hat ebenso Vorteile, wenn der Anschlussadapter durch eine Öffnung in einem Gehäuse einer Hochspannungsbaugruppe geführt ist. Die Auskragung kann dann bei geeigneter Dimensionierung die Bewegung des Anschlussadapters in die Erstreckungsrichtung des ersten Anschlussmittels begrenzen.

Für die Feldverteilung hat es sich bereits als ausreichend erwiesen, wenn der erste Bereich bezogen auf den zweiten Bereich um wenige Millimeter tiefer angeordnet ist. Es hat sich gezeigt, dass Tiefen von 1 bis 4 Millimetern ausreichend sind, um die Feldverteilung um das erste Anschlussmittel herum ausreichend günstig zu beeinflussen, weshalb dieser Bereich eine bevorzugte Dimensionierung darstellt. Vorzugsweise ist der zweite Bereich im Wesentlich plan ausgebildet. Dieser plane zweite Bereich ist dabei vorzugsweise in eine Ebene parallel zu dem ersten Bereich angeordnet. Diese Ausgestaltung hat wiederum sowohl mechanische als auch produktionstechnische Vorteile und begünstigt zudem die Feldverteilung.

In einer bevorzugten Weiterbildung ist der erfindungsgemäße Anschlussadapter im Wesentlichen rotationssymmetrisch aufgebaut, wobei die Symmetrieachse durch eine Verbindungslinie zwischen den beiden Anschlussmitteln gebildet ist. Die Symmetrieachse fällt dann mit der Achse des ersten Anschlussmittels zusammen. Auch dies hat wiederum produktionstechnische Vorteile, da der Anschluss dann durch Drehmaschinen problemlos herstellbar ist.

Vorzugsweise ist an dem Grundkörper ein Haltebereich für ein Werkzeug ausgebildet, der bei Montage des Anschlussadapters Kräfte aufnehmen und an das Werkzeug ableiten kann. Der Haltebereich kann auf verschiedene Weise bereitgestellt sein. So könnte der Haltebereich durch eine Riffelung der Oberfläche gebildet sein, um für eine Zange eine verbesserte Reibung zu dem Grundkörper bereitzustellen. In einer bevorzugten Ausgestaltung hat der Haltebereich einen hexagonalen Querschnitt, wodurch der Grundkörper bei Einschrauben des Anschlussadapters mit einem Maulschlüssel oder einem vergleichbaren Werkzeug gehalten werden kann. Der Haltebereich kann sowohl bei einer rotationssymmetrischen Ausgestaltung des Anschlussadapters als auch bei einer nicht-rotationssymmetrischen Ausgestaltung bereitgestellt sein. Bei einer rotationssymmetrischen Ausgestaltung kann im Haltebereich von der Rotationssymmetrie abgewichen werden.

Der Gewindebolzen des ersten Anschlussmittels kann relativ beliebig dimensioniert sein. Wesentlich ist lediglich, dass das erste Anschlussmittel in der Lage ist, eine ausreichende mechanische Stabilität und einen ausreichenden elektrischen Kontakt zu dem Hochspannungsbauteil bereitzustellen. Entsprechend sind unterschiedlichste Durchmesser des Gewindebolzens, unterschiedlichste Gewindesteigungen und/ oder unterschiedliche Einschraubrichtungen möglich. Zu dünne erste Anschlussmittel werden dabei keine ausreichende mechanische Belastbarkeit bereitstellen. Daher weist das erste Anschlussmittel einen Durchmesser von mindestens 4 mm auf. Bevorzugter Weise ist das erste Anschlussmittel als M5-Gewindebolzen ausgebildet, d.h. der Gewindebolzen ist gemäß DIN13-1 genormt und hat einen Nenndurchmesser von 5 mm. Diese Ausgestaltung des Gewindebolzens ist insbesondere dahingehend vorteilhaft, da in der Praxis Hochspannungsbauteile, beispielsweise Mittelspannungskapazitäten, mit einer M5-Gewindebuchse verfügbar sind, in die der Anschlussadapter einschraubbar ist.

An einer dem ersten Anschlussmittel gegenüberliegenden Seite des Grundkörpers ist ein weiteres Anschlussmittel - zweites Anschlussmittel - angeordnet. In einer ersten Ausgestaltung ist dieses zweite Anschlussmittel als Gewindebuchse ausgebildet. Auch hier sind wiederum verschiedenste Dimensionierungen vorstellbar. Im Mittelspannungsbereich haben sich jedoch M12-Gewinde als ein Quasistandard etabliert, so dass das zweite Anschlussmittel in dieser ersten Ausgestaltung vorzugsweise als M12-Gewindebuchse ausgebildet ist. Damit kann der Anschlussadapter mit dem zweiten Anschlussmittel an einem Mittelspannungsnetzwerk befestigt werden, während das erste Anschlussmittel in das Hochspannungsbauteil, beispielsweise einer Mittelspannungskapazität, eingeschraubt ist.

In einer zweiten Ausgestaltung des zweiten Anschlussmittels ist dieses als Gewindebolzen ausgebildet. Dabei ist vorzugsweise auch um dieses zweite Anschlussmittel an dem Grundkörper ein erster und zweiter Bereich ausgebildet, wobei das zweite Anschlussmittel vorzugsweise wie das erste Anschlussmittel ausgebildet ist, der erste Bereich um das zweite Anschlussmittel wie der erste Bereich um das zweite Anschlussmittel und der zweite Bereich um das zweite Anschlussmittel wie der zweite Bereich um das erste Anschlussmittel. Auf diese Weise kann auch um das zweite Anschlussmittel eine Vertiefung gebildet sein, die gleiche mechanische und elektrische Eigenschaften aufweist wie um das erste Anschlussmittel herum. Auf diese Weise kann ein derart ausgestalteter Anschlussadapter zum Verbinden zweier Hochspannungsbauteile, beispielsweise zweier Mittelspannungskapazitäten, genutzt werden. Hinsichtlich der Eigenschaften auf Lufteinschlüsse im Bereich um das zweite Anschlussmittel gelten damit die voranstehenden Ausführungen. Dabei kann der Anschlussadapter symmetrisch aufgebaut sein, wobei die Symmetrieebene vorzugsweise senkrecht zu einer Verbindungslinie zwischen den beiden Anschlussmitteln ausgebildet ist.

Die erfindungsgemäße Hochspannungsgruppe umfasst ein Gehäuse, ein erstes Hochspannungsbauteil, beispielsweise eine Mittelspannungskapazität, und einen erfindungsgemäßen Anschlussadapter. Der Anschlussadapter ist dabei durch eine Wandung des Gehäuses geführt, wobei das erste Anschlussmittel im Inneren des Gehäuses angeordnet und das zweite Anschlussmittel außerhalb des Gehäuses angeordnet ist. Auf diese Weise kann das erste Anschlussmittel vom Inneren des Gehäuses aus erreicht werden, während das zweite Anschlussmittel von außerhalb des Gehäuses erreichbar ist. Das erste Anschlussmittel ist in eine Gewindebuchse eingeschraubt, die in dem ersten Hochspannungsbauteil ausgebildet ist. Mit dem zweiten Anschlussmittel kann die Hochspannungsbaugruppe an ein Hochspannungsnetzwerk, insbesondere in Mittelspannungsnetzwerk, angeschlossen werden. Entsprechend ist das zweite Anschlussmittel vorzugsweise als M12 Gewindebuchse ausgebildet.

Der Bereich um den Anschlussadapter herum ist zwischen dem ersten Hochspannungsbauteil und dem Gehäuse vorzugsweise mit einer Vergussmasse vergossen. Zum Vergießen könnte der Anschlussadapter in eine Öffnung in einer Wandung des Gehäuses eingesetzt werden, wobei das zweite Anschlussmittel nach unten orientiert gehalten wird. Bei Vorsehen einer Auskragung bei dem zweiten Bereich um das erste Anschlussmittel herum kann die Auskragung dazu beitragen, ein Herausfallen des Anschlussadapters aus der Öffnung zu verhindern. Danach könnte eine Vergussmasse in das Gehäuse eingefüllt werden. Zur einfacheren Bemessung der Vergussmasse könnte im Inneren des Gehäuses eine Messlinie ausgebildet sein, bis zu der die Vergussmasse eingefüllt würde. Andere Möglichkeiten zum Bemessen der Vergussmasse sind ebenso denkbar. Anschließend würde das Hochspannungsbauteil in das Gehäuse eingesetzt und in das erste Anschlussmittel eingeschraubt. Das Hochspannungsbauteil verdrängt dadurch die Vergussmasse teilweise, so dass die Vergussmasse den Bereich zwischen Gehäuse und Hochspannungsbauteil ausfüllt. Danach würde die Vergussmasse, eventuell unter Temperatureinwirkung, ausgehärtet.

Die Hochspannungsbaugruppe kann ergänzend ein zweites Hochspannungsbauteil aufweisen, das beispielsweise als Mittelspannungskapazität ausgebildet sein kann. Das erste Hochspannungsbauteil könnte dabei mit dem zweiten Hochspannungsbauteil durch einen entsprechend ausgestalteten erfindungsgemäßen zweiten Anschlussadapter verbunden sein. Dieser zweite Anschlussadapter weist dabei vorzugsweise sowohl bei dem ersten als auch bei dem zweiten Anschlussmittel ein M5-Gewindebolzen auf. Auch hier kann der Bereich zwischen Gehäuse, erstem und zweitem Hochspannungsbauteil mit einer Vergussmasse vergossen sein.

In einer besonders bevorzugten Ausgestaltung ist die Hochspannungsbaugruppe durch einen Koppler gebildet, wie er in der deutschen Patentanmeldung 10 2014 222 420 beschrieben ist.

Es gibt nun verschiedene Möglichkeiten, die Lehre der vorliegenden Erfindung in vorteilhafter Weise auszugestalten und weiterzubilden. Dazu ist einerseits auf die dem Anspruch 1 bzw. 13 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine Seitenansicht eines ersten Ausführungsbeispiels eines erfindungsgemäßen Anschlussadapters mit jeweils einem Gewindebolzen als erstes und zweites Anschlussmittel,
- Fig. 2: ein Schnitt durch den Anschlussadapter nach Fig. 1 entlang Linie A - A,
- Fig. 3: eine Schrägansicht des Anschlussadapters nach Fig. 1,
- Fig. 4: eine Draufsicht des Anschlussadapters nach Fig. 1,
- Fig. 5: eine Seitenansicht eines zweiten Ausführungsbeispiels eines erfindungsgemäßen Anschlussadapters mit einem Gewindebolzen als erstes Anschlussmittel und einer Gewindebuchse als zweites Anschlussmittel,
- Fig. 6: einen Schnitt durch den Anschlussadapter nach Fig. 5 entlang der Linie B - B,
- Fig. 7: eine Draufsicht des Anschlussadapters nach Fig. 5 auf die Seite des ersten Anschlussmittels,
- Fig. 8: eine Draufsicht des Anschlussadapters nach Fig. 5 auf die Seite des zweiten Anschlussmittels,
- Fig. 9: eine Schrägansicht des Anschlussadapters nach Fig. 5 auf die Seite des ersten Anschlussmittels,
- Fig. 10: eine Schrägansicht des Anschlussadapters nach Fig. 5 auf die Seite des zweiten Anschlussmittels,
- Fig. 11: eine Seitenansicht einer Hochspannungsbaugruppe, die als kapazitiver Mittelspannungskoppler ausgebildet ist, mit einem erfindungsgemäßen Anschlussadapter nach Fig. 5,
- Fig. 12: ein Schnitt durch die Hochspannungsbaugruppe nach Fig. 11 entlang der Linie C - C und
- Fig. 13: eine Vergrößerung des Bereichs um den Anschlussadapters nach Fig. 12.

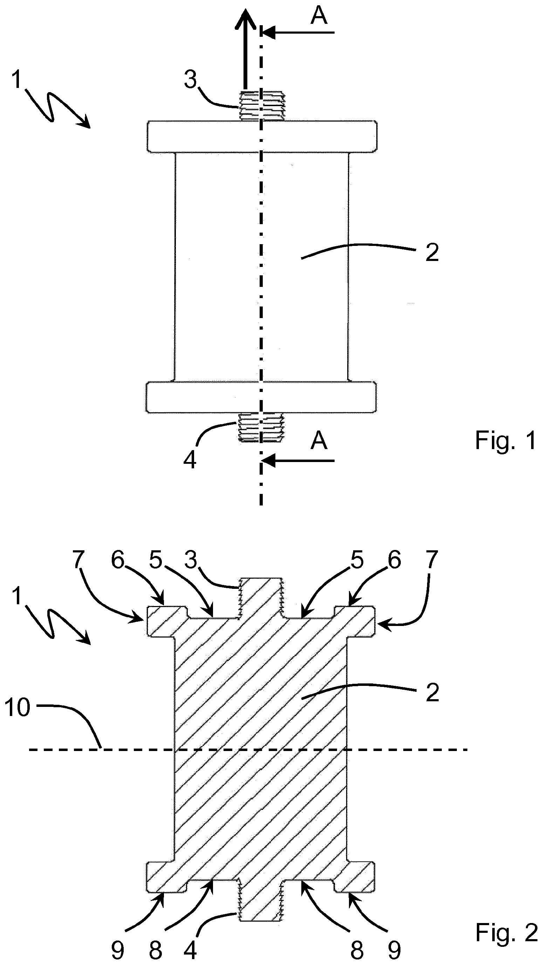

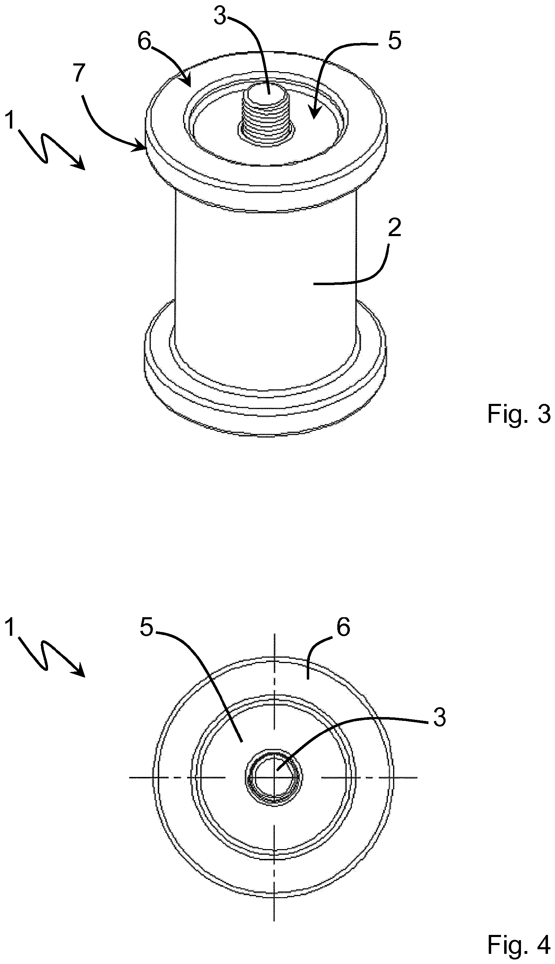

Die Figuren 1 bis 4 zeigen verschiedene Ansichten eines ersten Ausführungsbeispiels eines erfindungsgemäßen Anschlussadapters. Dabei ist sowohl das erste als auch das zweite Anschlussmittel als Gewindebolzen ausgebildet, in dem dargestellten Ausführungsbeispiel als M5-Gewindebolzen. Fig. 1 zeigt eine Seitenansicht des Anschlussadapters, Fig. 2 einen Schnitt entlang der Linie A - A, Fig. 3 eine Schrägansicht und Fig. 4 eine Draufsicht auf den Anschlussadapter. Der Anschlussadapter 1 weist dabei einen Grundkörper 2 auf, an dessen einen Seite ein Gewindebolzen zum Bilden eines ersten Anschlussmittels 3 ausgebildet ist. Der Gewindebolzen erstreckt sich dabei von dem Gewindebolzen weg, wobei die Erstreckungsrichtung des Gewindebolzens durch einen Pfeil symbolisiert ist. Die Achse des Gewindebolzens fällt in Fig. 1 mit der Schnittlinie A - A zusammen, wobei die Schnittlinie A-A in Fig. 1 auch die Verbindungslinie zwischen den beiden Anschlussmitteln bildet. Auf der Seite des Grundkörpers 2, die dem ersten Anschlussmittel 3 gegenüberliegt, ist ein zweites Anschlussmittel 4 ausgebildet.

Um das erste Anschlussmittel 3 herum ist ein erster Bereich 5 ausgebildet, der sich unmittelbar an das erste Anschlussmittel 3 anschließt und plan ausgebildet ist. Wie in Fig. 3 zu erkennen, ist der erste Bereich 5 in seinem Außenumfang kreisrund ausgebildet. Dadurch ist die Ausdehnung in Richtungen quer zu der Achse des ersten Anschlussmittels durch den Durchmesser der kreisrunden Begrenzung des ersten Bereichs definiert. Diese Ausdehnung ist in dem dargestellten Ausführungsbeispiel ca. 3,5-mal so groß wie der Durchmesser des ersten Anschlussmittels.

Um den ersten Bereich 5 herum ist ein zweiter Bereich 6 angeordnet, der in der Ausgestaltung gemäß erstem Ausführungsbeispiel ebenso plan ausgebildet ist und der parallel zu dem ersten Bereich angeordnet ist. Dabei ist der erste Bereich in Bezug auf den zweiten Bereich in Erstreckungsrichtung des ersten Anschlussmittels tiefer angeordnet, in der dargestellten Ausführungsform ca. 1,5 mm tiefer. Der zweite Bereich 6 ist Teil einer Auskragung 7, die an dem Grundkörper 2 ausgebildet ist.

Um das zweite Anschlussmittel 4 ist ebenso ein erster Bereich 8 und ein zweiter Bereich 9 ausgebildet, wobei der erste Bereich 8 weitgehend identisch zu dem ersten Bereich 5 und der zweite Bereich 9 weitgehend identisch zu dem zweiten Bereich 6 ausgebildet ist. Auch eine Auskragung ist bei dem zweiten Bereich 9 vorgesehen. Insgesamt ist der Anschlussadapter damit symmetrisch zu einer Ebene aufgebaut, die senkrecht zu der Verbindungslinie zwischen den beiden Anschlussmitteln ausgebildet ist. Die Symmetrieebene ist in Fig. 2 als gestrichelte Linie 10 angedeutet. Gleichzeitig ist der Anschlussadapter rotationssymmetrisch ausgebildet, wobei die Verbindungslinie zwischen den beiden Anschlussmitteln die Symmetrieachse bildet.

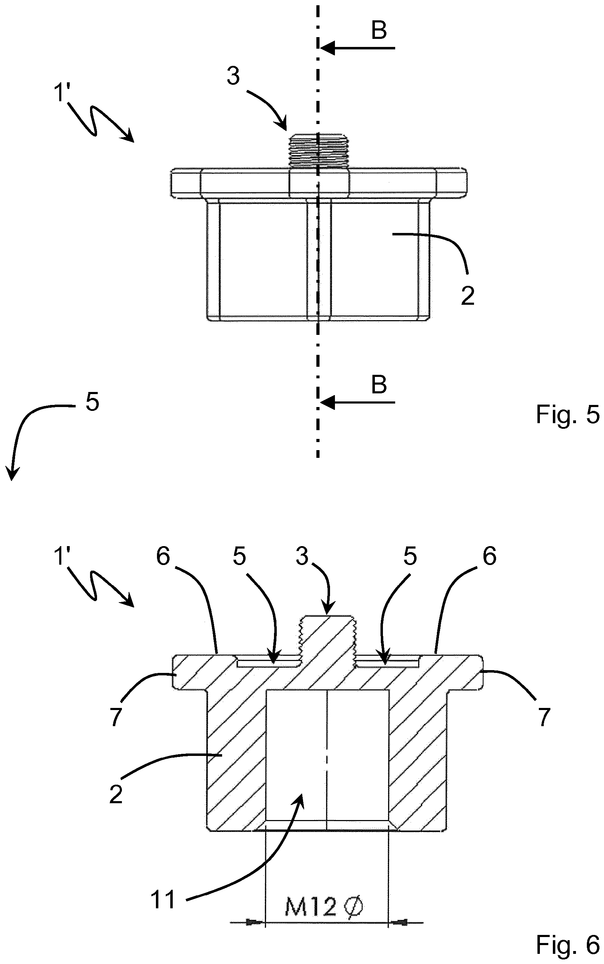

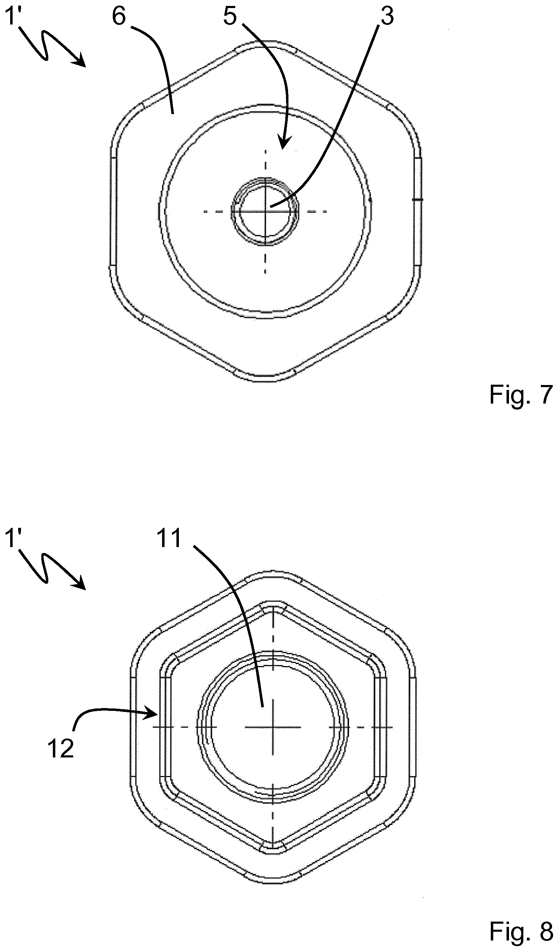

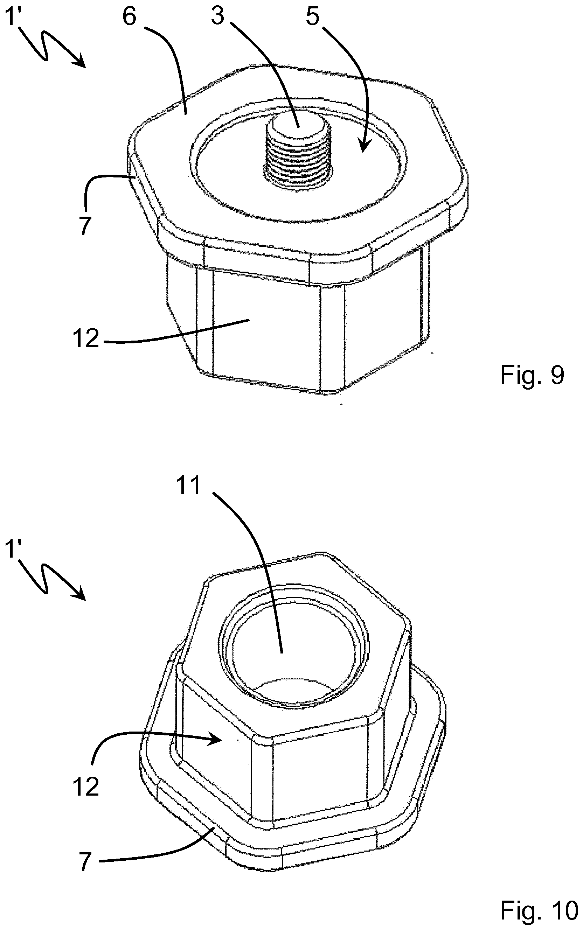

Die Figuren 5 bis 10 beziehen sich auf ein zweites Ausführungsbeispiel eines erfindungsgemäßen Anschlussadapters, bei dem das erste Anschlussmittel durch einen Gewindebolzen und das zweite Anschlussmittel durch eine Gewindebuchse gebildet ist. Fig. 5 zeigt eine Seitenansicht des Anschlussadapters, Fig. 6 einen Schnitt entlang der Linie B - B, Fig. 7 eine Draufsicht auf die Seite des ersten Anschlussmittels, Fig. 8 eine Draufsicht auf die Seite des zweiten Anschlussmittels, Fig. 9 eine Schrägansicht auf die Seite des ersten Anschlussmittels und Fig. 10 eine Schrägansicht auf Seite des zweiten Anschlussmittels.

Der Anschlussadapter 1' gemäß zweitem Ausführungsbeispiel weist einen Grundkörper 2 auf, an dessen einen Seite ein Gewindebolzen als erstes Anschlussmittel 3 ausgebildet ist, das sich von dem Grundkörper weg erstreckt. Auf der gegenüberliegenden Seite ist ein zweites Anschlussmittel 11 in Form einer M12-Gewindebuchse ausgebildet. Um das erste Anschlussmittel 3 ist wiederum ein erster Bereich und um den ersten Bereich 5 ein zweiter Bereich 6 ausgebildet. Der zweite Bereich 6 ist Teil einer Auskragung 7. Das erste Anschlussmittel, der erste Bereich 5 und der zweite Bereich 6 sind dabei im Wesentlichen identisch aufgebaut zu dem ersten Ausführungsbeispiel. In Fig. 7 ist zu erkennen, dass die Berandung des zweiten Bereichs nicht kreisrund gewählt ist, sondern sechseckig ausgebildet ist, wobei die Ecken abgerundet sind. Die sechseckige Ausgestaltung des Randbereichs des zweiten Bereichs führt dazu, dass nach Einsetzen des Anschlussadapters 1' in eine Gehäusewandung der Randbereich bei geeigneter Ausgestaltung der Öffnung ein Verdrehen des Anschlussadapters verhindert werden kann. Die Abrundungen vermeiden, dass Feldspitzen an dem Rand des zweiten Bereichs entstehen. Die Ausdehnung des ersten Bereichs ist dabei ca. 3-mal so groß wie der Durchmesser des ersten Anschlussmittels.

In den Figuren 8 bis 10 ist ein Haltebereich 12 erkennbar, der in dem dargestellten Ausführungsbeispiel einen hexagonalen Querschnitt aufweist. An den Haltebereich kann ein Maulschlüssel angesetzt werden, mit dem Kräfte beim Einschrauben des Anschlussadapters in das Hochspannungsbauteil bzw. beim Einschrauben des zweiten Anschlussmittels in einen M12-Gewindebolzen, beispielsweise an einer Sammelschiene eines Mittelspannungsnetzwerks, aufgenommen werden können.

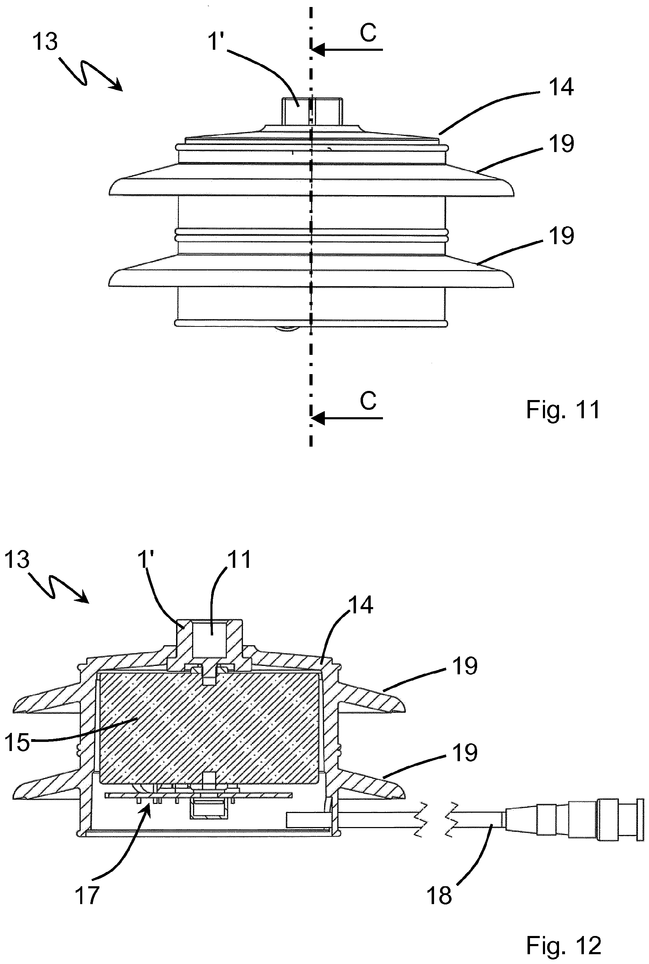

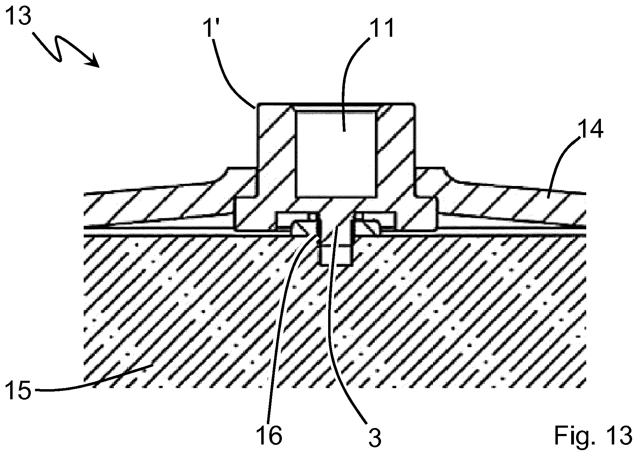

In den Figuren 11 bis 13 ist ein Ausführungsbeispiel einer Hochspannungsbaugruppe dargestellt, in dem ein Anschlussadapter gemäß zweitem Ausführungsbeispiel verwendet ist. Fig. 11 zeigt eine Seitenansicht der Hochspannungsbaugruppe 13, Fig. 12 einen Schnitt durch die Hochspannungsbaugruppe entlang der Linie C - C. In Fig. 13 ist eine Vergrößerung eines Bereichs aus Fig. 12 mit dem Anschlussadapter dargestellt.

Die Hochspannungsbaugruppe 13 umfasst ein Gehäuse 14, einen Anschlussadapter 1' sowie ein Hochspannungsbauteil, das in diesem Fall als Mittelspannungskapazität 15 ausgebildet ist. An einer Seite der Mittelspannungskapazität 15 ist eine Gewindebuchse 16 ausgebildet, in die das erste Anschlussmittel 3 an dem Anschlussadapter 1' eingeschraubt ist. Auf der gegenüberliegenden Seite der Mittelspannungskapazität 15 ist ebenso eine Gewindebuchse angeordnet, an der in der dargestellten Ausführungsform ein Koppelnetzwerk 17 angeschraubt ist. Über das Koppelnetzwerk 17 können PLC-Signale, die aus einem mit dem zweiten Anschlussmittel 11 verbundenen Mittelspannungsnetzwerk über den Anschlussadapter 1' und die Mittelspannungskapazität 15 empfangen werden, über ein Kabel 18 zu einem PLC-Modem geleitet werden. Entsprechend können PLC-Signale von einem PLC-Modem über das Kabel 18, Koppelnetzwerk 17, Mittelspannungskapazität 15 und Anschlussadapter 1' an das Mittelspannungsnetzwerk übertragen werden. An dem Gehäuse sind Isolierrippen 19 ausgebildet, die die Kriechwege entlang der Gehäuseoberfläche vergrößern.

Die Mittelspannungskapazität 15 ist in der dargestellten Ausführungsform als Keramikkondensator ausgebildet, wobei an der in Fig. 12 oberen Seite eine Elektrode angeordnet ist und an der gegenüberliegenden Seite die zweite Elektrode. Zwischen den Elektroden ist ein nicht eingezeichnetes Dielektrikum angeordnet. Im Bereich um die Gewindebuchse 16 ist die Koppelkapazität etwas erhöht, wobei die Erhöhung in die Vertiefung an dem Anschlussadapter 1' eingreift. Dies ist in Fig. 13 deutlich zu erkennen. Es ist auch zu erkennen, dass in dem dargestellten Ausführungsbeispiel ein kleiner Spalt zwischen Mittelspannungskapazität 15 und Anschlussadapter 1' vorhanden ist. Damit können Herstellungstoleranzen ausgeglichen werden. Der Spalt kann auch kleiner gewählt sein.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Anschlussadapter
- 2: Grundkörper
- 3: erstes Anschlussmittel
- 4: zweites Anschlussmittel
- 5: erster Bereich (um erstes Anschlussmittel)
- 6: zweiter Bereich (um erstes Anschlussmittel)
- 7: Auskragung
- 8: erster Bereich (um zweites Anschlussmittel)
- 9: zweiter Bereich (um zweites Anschlussmittel)
- 10: Symmetrieebene
- 11: M12-Gewindebuchse
- 12: Haltebereich
- 13: Hochspannungsbaugruppe
- 14: Gehäuse
- 15: Mittelspannungskapazität
- 16: Gewindebuchse
- 17: Koppelnetzwerk
- 18: Anschlusskabel

## Patentansprüche

1. Anschlussadapter für ein Hochspannungsbauteil, insbesondere eine Mittelspannungskapazität (15), wobei der Anschlussadapter (1, 1') einen Grundkörper (2) aufweist, an dem an zwei gegenüberliegenden Seiten jeweils ein Anschlussmittel ausgebildet ist, wobei mindestens eines der beiden Anschlussmittel - erstes Anschlussmittel (3) - als Gewindebolzen, vorzugsweise als M5-Gewindebolzen, ausgebildet ist, der sich von dem Grundkörper (2) weg erstreckt, und wobei das erste Anschlussmittel (3) in eine in dem Hochspannungsbauteil ausgebildeten Gewindebuchse (16) einschraubbar ist,
**dadurch gekennzeichnet, dass** an dem Grundkörper (2) um das erste Anschlussmittel (3) herum ein erster Bereich (5) und um den ersten Bereich (5) herum ein zweiter Bereich (6) ausgebildet ist, dass der erste Bereich (5) in Erstreckungsrichtung des ersten Anschlussmittels (3) tiefer angeordnet ist als der zweite Bereich (6) und dass der erste Bereich (5) in Richtungen quer zu einer Achse des ersten Anschlussmittels (3) eine Ausdehnung aufweist, die mindestens doppelt, vorzugsweise mindestens dreimal, so groß ist wie der Durchmesser des ersten Anschlussmittels (3).

2. Anschlussadapter nach Anspruch 1, **dadurch gekennzeichnet, dass** der erste Bereich (5) unmittelbar an das erste Anschlussmittel (3) anschließt, wobei der erste Bereich (5) vorzugsweise plan und/oder an seinem Außenumfang kreisrund ausgebildet ist.

3. Anschlussadapter nach Anspruch 1 oder 2, **dadurch gekennzeichnet, dass** der zweite Bereich (6) eine Breite größer oder gleich dem Durchmesser des ersten Anschlussmittels (3) aufweist und/oder dass der zweite Bereich (6) im Wesentlichen plan und vorzugsweise in einer Ebene parallel zu dem ersten Bereich (5) ausgebildet ist.

4. Anschlussadapter nach einem der Ansprüche 1 bis 3, **dadurch gekennzeichnet, dass** der zweite Bereich (6) Teil einer Auskragung (7) ist, die an dem Grundkörper (2) ausgebildet ist.

5. Anschlussadapter nach einem der Ansprüche 1 bis 4, **dadurch gekennzeichnet, dass** der erste Bereich (5) bezogen auf den zweiten Bereich (6) um wenige Millimeter, vorzugsweise 1 mm bis 4 mm, tiefer angeordnet ist.

6. Anschlussadapter nach einem der Ansprüche 1 bis 5, **dadurch gekennzeichnet, dass** der Anschlussadapter (1, 1') im Wesentlichen rotationssymmetrisch aufgebaut ist, wobei die Symmetrieachse durch eine Verbindungslinie zwischen den beiden Anschlussmitteln (3, 4) gebildet ist.

7. Anschlussadapter nach einem der Ansprüche 1 bis 6, **dadurch gekennzeichnet, dass** an dem Grundkörper (2) ein Haltebereich (12) ausgebildet ist, der vorzugsweise einen hexagonalen Querschnitt ausweist.

8. Anschlussadapter nach einem der Ansprüche 1 bis 7, **dadurch gekennzeichnet, dass** das dem ersten Anschlussmittel (3) gegenüberliegende Anschlussmittel - zweites Anschlussmittel (4) - als Gewindebuchse, vorzugsweise als M12-Gewindebuchse (11), ausgebildet ist.

9. Anschlussadapter nach einem der Ansprüche 1 bis 7, **dadurch gekennzeichnet, dass** das dem ersten Anschlussmittel (3) gegenüberliegende Anschlussmittel - zweites Anschlussmittel (4) - als Gewindebolzen, vorzugsweise als M5-Gewindebolzen, ausgebildet ist.

10. Anschlussadapter nach Anspruch 9, **dadurch gekennzeichnet, dass** um das zweite Anschlussmittel (4) an dem Grundkörper (2) ein erster Bereich (8) und um den ersten Bereich (8) herum ein zweiter Bereich (9) ausgebildet ist, wobei das zweite Anschlussmittel (4) vorzugsweise wie das erste Anschlussmittel (3) und der erste und/oder zweite Bereich (8, 9) um das zweite Anschlussmittel (4) vorzugsweise wie der erste und/oder zweite Bereich (5, 6) um das erste Anschlussmittel (3) ausgebildet ist.

11. Anschlussadapter nach Anspruch 9 oder 10, **dadurch gekennzeichnet, dass** der Anschlussadapter (1) zum Verbinden zweier Hochspannungsbauteile, insbesondere zweier Mittelspannungskapazitäten (15), ausgebildet ist.

12. Anschlussadapter nach einem der Ansprüche 9 bis 11, **dadurch gekennzeichnet, dass** der Anschlussadapter (1) symmetrisch aufgebaut ist, wobei eine Symmetrieebene (10) senkrecht zu einer Verbindungslinie zwischen den beiden Anschlussmitteln (3, 4) ausgebildet ist.

13. Hochspannungsbaugruppe mit einem Gehäuse (14), einem ersten Hochspannungsbauteil, insbesondere einer Mittelspannungskapazität (15), und einem Anschlussadapter (1') nach einem der Ansprüche 1 bis 8, wobei der Anschlussadapter (1') durch eine Öffnung in einer der Wandungen des Gehäuses (14) geführt ist, wobei das erste Anschlussmittel (3) im Inneren des Gehäuses (14) und das zweite Anschlussmittel (4) außerhalb des Gehäuses (14) erreichbar ist, wobei das erste Anschlussmittel (3) in eine Gewindebuchse (16) in dem ersten Hochspannungsbauteil eingeschraubt ist und wobei das zweite Anschlussmittel (4) zum Anschließen der Hochspannungsbaugruppe (13) an ein Hochspannungsnetzwerk, insbesondere ein Mittelspannungsnetzwerk, ausgebildet ist.

14. Hochspannungsbaugruppe nach Anspruch 13, **dadurch gekennzeichnet, dass** der Bereich zwischen erstem Hochspannungsbauteil (15) und Gehäuse (14) um den Anschlussadapter (1') herum mit einer Vergussmasse vergossen ist.

15. Hochspannungsbaugruppe nach Anspruch 13 oder 14, **gekennzeichnet durch** ein zweites Hochspannungsbauteil, insbesondere eine Mittelspannungskapazität (15), wobei das erste Hochspannungsbauteil und das zweite Hochspannungsbauteil mit einem Anschlussadapter nach einem der Ansprüche 9 bis 12 verbunden ist.

## Claims

1. Connection adapter for a high-voltage component, in particular a medium-voltage capacitor (15), wherein the connection adapter (1, 1') has a base member (2) on which at each of two opposing sides a connection means is formed, wherein at least one of the two connection means - first connection means (3) - is constructed as a threaded bolt, preferably as an M5 threaded bolt, which extends away from the base member (2), and wherein the first connection means (3) can be screwed into a threaded bush (16) formed in the high-voltage component,
**characterised in that** on the base member (2) a first region (5) is formed around the first connection means (3) and a second region (6) is formed around the first region (5), **in that** the first region (5) is arranged lower in the extent direction of the first connection means (3) than the second region (6) and **in that** the first region (5) has in directions transverse relative to an axis of the first connection means (3) an extent which is at least twice, preferably at least three times, as large as the diameter of the first connection means (3).

2. Connection adapter according to claim 1, **characterised in that** the first region (5) directly adjoins the first connection means (3), wherein the first region (5) is preferably formed in a planar manner and/or circular manner at the outer periphery thereof.

3. Connection adapter according to claim 1 or 2, **characterised in that** the second region (6) has a width which is greater than or equal to the diameter of the first connection means (3) and/or **in that** the second region (6) is formed in a substantially planar manner and preferably in a plane parallel with the first region (5).

4. Connection adapter according to any one of claims 1 to 3, **characterised in that** the second region (6) is part of a protrusion (7) which is constructed on the base member (2).

5. Connection adapter according to any one of claims 1 to 4, **characterised in that** the first region (5) with respect to the second region (6) is arranged lower by a few millimetres, preferably from 1 mm to 4 mm.

6. Connection adapter according to any one of claims 1 to 5, **characterised in that** the connection adapter (1, 1') is constructed in a substantially rotationally symmetrical manner, wherein the axis of symmetry is formed by means of a connection line between the two connection means (3, 4).

7. Connection adapter according to any one of claims 1 to 6, **characterised in that** there is formed on the base member (2) a retention region (12) which preferably has a hexagonal cross-section.

8. Connection adapter according to any one of claims 1 to 7, **characterised in that** the connection means opposite the first connection means (3) - the second connection means (4) - is constructed as a threaded bush, preferably as an M12 threaded bush (11).

9. Connection adapter according to any one of claims 1 to 7, **characterised in that** the connection means opposite the first connection means (3) - the second connection means (4) - is constructed as a threaded bush, preferably as an M5 threaded bush.

10. Connection adapter according to claim 9, **characterised in that** a first region (8) is formed around the second connection means (4) on the base member (2) and a second region (9) is formed around the first region (8), wherein the second connection means (4) is preferably constructed in the same manner as the first connection means (3) and the first and/or second region (8, 9) around the second connection means (4) is preferably formed in the same manner as the first and/or second region (5, 6) around the first connection means (3).

11. Connection adapter according to claim 9 or 10, **characterised in that** the connection adapter (1) is constructed for connecting two high-voltage components, in particular two medium-voltage capacitors (15).

12. Connection adapter according to any one of claims 9 to 11, **characterised in that** the connection adapter (1) is constructed in a symmetrical manner, wherein a plane of symmetry (10) is constructed to be perpendicular to a connection line between the two connection means (3, 4).

13. High-voltage subassembly having a housing (14), a first high-voltage component, in particular a medium-voltage capacitor (15), and a connection adapter (1') according to any one of claims 1 to 8, wherein the connection adapter (1') is guided through an opening in one of the walls of the housing (14), wherein the first connection means (3) can be reached inside the housing (14) and the second connection means (4) can be reached outside the housing (14), wherein the first connection means (3) is screwed into a threaded bush (16) in the first high-voltage component, and wherein the second connection means (4) for connecting the high-voltage subassembly (13) is constructed on a high-voltage network, in particular a medium-voltage network.

14. High-voltage subassembly according to claim 13, **characterised in that** the region between the first high-voltage component (15) and the housing (14) is cast around the connection adapter (1') with a casting compound.

15. High-voltage subassembly according to claim 13 or 14, **characterised by** a second high-voltage component, in particular a medium-voltage capacitor (15), wherein the first high-voltage component and the second high-voltage component is connected to a connection adapter according to any one of claims 9 to 12.

## Revendications

1. Adaptateur de connexion pour un composant à haute tension, plus particulièrement un condensateur moyenne tension (15), l'adaptateur de connexion (1, 1') comprenant un corps de base (2), sur lequel, au niveau de deux côtés opposés, se trouve un moyen de connexion, au moins un des deux moyens de connexion, le premier moyen de connexion (3), est conçu comme une tige filetée, de préférence comme une tige filetée M5, qui s'étend en s'éloignant du corps de base (2), et le premier moyen de connexion (3) pouvant être vissé dans une douille filetée (16) réalisée dans le composant à haute tension,
**caractérisé en ce que**, sur le corps de base (2), autour du premier moyen de connexion (3), est réalisée une première zone (5) et autour de la première zone (5) est réalisée une deuxième zone (6), **en ce que** la première zone (5) est disposée dans la direction d'extension du premier moyen de connexion (3) plus bas que la deuxième zone (6) et **en ce que** la première zone (5) comprend, dans des directions transversales à un axe du premier moyen de connexion (3), une extension qui est au moins deux fois, de préférence au moins trois fois supérieure au diamètre du premier moyen de connexion (3).

2. Adaptateur de connexion selon la revendication 1, **caractérisé en ce que** la première zone (5) prolonge immédiatement le premier moyen de connexion (3), la première zone (5) étant conçue de préférence de manière plane et/ou de manière circulaire au niveau de sa circonférence externe.

3. Adaptateur de connexion selon la revendication 1 ou 2, **caractérisé en ce que** la deuxième zone (6) présente une largeur supérieure ou égale au diamètre du premier moyen de connexion (3) et/ou **en ce que** la deuxième zone (6) est conçue de manière globalement plane et de préférence dans un plan parallèle à la première zone (5).

4. Adaptateur de connexion selon l'une des revendications 1 à 3, **caractérisé en ce que** la deuxième zone (6) fait partie d'une saillie (7), qui est réalisée sur le corps de base (2).

5. Adaptateur de connexion selon l'une des revendications 1 à 4, **caractérisé en ce que** la première zone (5) est disposée plus bas de quelques millimètres, de préférence de 1 mm à 4 mm, par rapport à la deuxième zone (6).

6. Adaptateur de connexion selon l'une des revendications 1 à 5, **caractérisé en ce que** l'adaptateur de connexion (1, 1') est conçu avec globalement une symétrie de rotation, l'axe de symétrie étant constitué d'une ligne de liaison entre les deux moyens de connexion (3, 4).

7. Adaptateur de connexion selon l'une des revendications 1 à 6, **caractérisé en ce que**, sur le corps de base (2) se trouve une zone de maintien (12), qui comprend de préférence une section transversale hexagonale.

8. Adaptateur de connexion selon l'une des revendications 1 à 7, **caractérisé en ce que** le moyen de connexion opposé au premier moyen de connexion (3), le deuxième moyen de connexion (4), est conçu comme une douille filetée, de préférence comme une douille filetée M12 (11).

9. Adaptateur de connexion selon l'une des revendications 1 à 6, **caractérisé en ce que** le moyen de connexion opposé au premier moyen de connexion (3), le deuxième moyen de connexion (4), est conçu comme une tige filetée, de préférence comme une tige filetée M5.

10. Adaptateur de connexion selon la revendication 9, **caractérisé en ce que**, autour du deuxième moyen de connexion (4), sur le corps de base (2), se trouve une première zone (8) et autour de la première zone (8) se trouve une deuxième zone (9), le deuxième moyen de connexion (4) étant conçu de préférence comme le premier moyen de connexion (3) et la première et/ou la deuxième zone (8, 9) autour du deuxième moyen de connexion de préférence comme la première et/ou la deuxième zone (5, 6) autour du premier moyen de connexion (3).

11. Adaptateur de connexion selon la revendication 9 ou 10, **caractérisé en ce que** l'adaptateur de connexion (1) est conçu pour la liaison de deux composants à haute tension, plus particulièrement de deux condensateurs moyenne tension (15).

12. Adaptateur de connexion selon l'une des revendications 9 à 11, **caractérisé en ce que** l'adaptateur de connexion (1) est symétrique, un plan de symétrie (10) étant perpendiculaire à une ligne de liaison entre les deux moyens de connexion (3, 4).

13. Sous-ensemble à haute tension avec un boîtier (14), un premier composant à haute tension, plus particulièrement un condensateur moyenne tension (15) et un adaptateur de connexion (1') selon l'une des revendications 1 à 8, l'adaptateur de connexion (1') étant guidé à travers une ouverture dans une des parois du boîtier (14), le premier moyen de connexion (3) étant accessible à l'intérieur du boîtier (14) et le deuxième moyen de connexion (3) étant accessible à l'extérieur du boîtier (14), le premier moyen de connexion (3) étant vissé dans une douille filetée (16) dans le premier composant à haute tension et le deuxième moyen de connexion (4) pour la connexion du sous-ensemble à haute tension (13) à un réseau à haute tension, plus particulièrement un réseau à moyenne tension.

14. Sous-ensemble à haute tension selon la revendication 13, **caractérisé en ce que** la zone est scellée avec une masse de scellement entre le premier composant à haute tension (15) et le boîtier (14) autour de l'adaptateur de connexion (1').

15. Sous-ensemble à haute tension selon la revendication 13 ou 14, **caractérisé par** un deuxième composant à haute tension, plus particulièrement un condensateur moyenne tension (15), le premier composant à haute tension et le deuxième composant à haute tension est relié avec un adaptateur de connexion selon l'une des revendications 9 à 12.
